# FASCICULE DE BREVET EUROPEEN

(11) **EP 2 673 621 B1**
(45) Date de publication et mention de la délivrance du brevet: **28.11.2018**
(21) Numéro de dépôt: 12706648.8
(22) Date de dépôt: 30.01.2012
(51) Int. Cl.: G01N 21/958

(54) **PROCEDE DE DETECTION DE DEFAUT OPTIQUE DANS UN PARE-BRISE**
VERFAHREN ZUR ERKENNUNG EINES OPTISCHEN DEFEKTS IN EINER WINDSCHUTZSCHEIBE
METHOD FOR DETECTING AN OPTICAL DEFECT IN A WINDSHIELD

(30) Priorité: 11.02.2011 FR 1151109
(43) Date de publication de la demande: 18.12.2013
(73) Titulaire: PSA Automobiles SA, 78300 Poissy (FR)
(72) Inventeur: LE ROUX, Stephanie, 75015 Paris (FR); LIN, Xuefeng, 92400 Courbevoie (FR)
(74) Mandataire: Fernandez, Francis Lionel
(86) Numéro de dépôt international: PCT/FR2012/050190
(87) Numéro de publication internationale: WO 2012/107666

(56) Documents cités:
- EP-A1- 1 857 773
- US-A- 5 812 260
- US-B1- 6 208 412

## Description

L'invention a trait à un procédé de détection de défaut optique dans une plaque de verre, plus particulièrement dans un pare-brise de véhicule. Plus particulièrement l'invention a trait à un procédé de détection de défaut notamment selon une direction avec une composante verticale dans une plaque de verre non plane, notamment présentant des courbures. Les plaques de verre, plus particulièrement les plaques de verre courbées et plus particulièrement encore les pare-brises sont susceptibles de présenter différents types de déformation optique ou de distorsion lors de l'observation au travers de leur surface. Lorsque la distorsion est importante, le champ de vision peut être déformé notamment en fonction de l'angle d'incidence à un point que les images soient fortement déformées et génèrent une gêne pour le conducteur. Les distorsions optiques peuvent avoir diverses origines. Un pare-brise est habituellement constitué de trois couches : une première feuille de verre, une couche de Polyvinyle de Butyral (PVB) et une deuxième couche de verre. En production, les deux feuilles de verre positionnées sur un support périphérique, sont formées ensemble par gravité principalement, puis les feuilles sont séparées et assemblées au film de PVB. Les plaques de verre plates initiales peuvent présenter des défauts comme par exemple des ondulations ou des variations d'épaisseur. L'action de formage du pare-brise par chauffage et déformation peut également accentuer ces défauts et/ou en générer d'autres.

Le document de brevet FR 2 556 067 A1 divulgue un appareil de détection de distorsions dans une plaque de verre à l'aide d'une mire. Un écran avec une mire à bandes inclinées alternées claires et sombres est mis en place et éclairé au moyen de projecteurs d'éclairage. La plaque de verre, plus particulièrement le pare-brise, est disposé en face de ladite mire, sur un support mobile en translation parallèlement au plan de la mire et mobile en rotation, de manière à ce qu'une des deux faces de la plaque soit en vis-à-vis de la mire. Un capteur photographique du type à couplage de charge (CCD pour « Charge-Coupled Device ») est disposé en vis-à-vis de l'autre des deux faces de la plaque. L'image de la mire au travers du pare-brise est ainsi observée et mémorisée au moyen du capteur photographique. Le support mobile du pare-brise permet de modifier l'angle de la surface du pare-brise par rapport à la mire et au capteur photographique qui sont fixes. Le support mobile permet également de modifier la zone du pare-brise au travers de laquelle l'observation de la mire est faite. En faisant pivoter le pare-brise de manière à former un angle entre la zone d'observation du pare-brise et le plan de la mire, l'appareil permet de simuler une observation comparable à celle d'un conducteur regardant à gauche ou à droite, c'est-à-dire du côté des trottoirs dans une configuration de roulage habituelle. Les bandes de la mire sont inclinées à 45° et leur déformation est observée et enregistrée par le capteur photographique, ce dernier étant apte à détecter les zones claires et les zone sombres suivant des lignes de balayage verticales. Cette méthode, en particulier en rapport avec la mire à bandes alternées et inclinées permet certes de détecter certaines distorsions mais n'est pas adaptée à détecter des défauts généralement verticaux ou du moins des défauts ayant une composante verticale.

Le document de brevet US 5,446,536 B divulgue un dispositif et un procédé de détection de distorsions dans une plaque de verre à l'aide d'un réseau de points lumineux. Une tour pourvue d'une série de points lumineux disposés de manière symétrique à la manière d'un maillage est mise en place. Un pare-brise est disposé sur un support de manière à présenter une de ses deux faces à ladite tour, le support permettant une rotation ainsi qu'une translation du pare-brise. Similairement à l'enseignement précédent, un capteur photographique du type à couplage de charge (CCD pour « Charge-Coupled Device ») est disposé de manière fixe en vis-à-vis de l'autre face du pare-brise. Le principe de la détection de distorsions est basé sur la variation de distance entre les points de la tour ainsi que sur la variation d'angle entre les droites passant par lesdits points. Tout comme pour l'enseignement précédent, cette approche permet de détecter certaines distorsions mais n'est pas adaptée à détecter des défauts généralement verticaux ou du moins des défauts ayant une composante verticale.

Le document de brevet FR 2 668 599 A1 a trait, similairement aux deux documents précédents, à un dispositif et un procédé de détection de distorsions dans une plaque de verre à l'aide d'une mire avec des losanges. La mire comprend deux faisceaux de bandes noires parallèles, ces deux faisceaux étant inclinés de manière contraire l'un par rapport à l'autre de manière à former des losanges. Le principe de la mesure consiste à repérer la position des quatre sommets des losanges constituant les domaines clairs de la mire, à les associer quatre par quatre pour constituer un réseau continu à mailles carrées, à mesurer les distances des noeuds des mailles et à les comparer à ce qu'elles étaient au même endroit, en l'absence du vitrage. Cette évaluation est effectuée entre sommets en diagonale d'une part et entre sommets voisins d'une autre part. Cette approche ne permet cependant pas de détecter les distorsions causées par un défaut selon une direction avec une composante verticale en raison notamment de la grossièreté du maillage représenté par les sommets des losanges.

Un procédé selon l'état de la technique antérieure est décrit dans le document US 5812260.

L'invention a pour objectif de proposer un procédé selon la revendication 1 de détection de distorsion dans une plaque de verre palliant au moins un des inconvénients sus mentionnés. Plus particulièrement, l'invention a pour objectif de proposer un procédé de détection de distorsions dans une plaque de verre, notamment un pare-brise, les distorsions étant provoquées par un défaut selon une direction avec une composante verticale.

L'invention a pour objet un procédé de détection de distorsion optique dans une plaque de verre, comme un pare-brise de véhicule, comprenant les étapes suivantes: (a) mise en place d'une mire et mise en place de ladite plaque de verre dans un environnement de ladite mire ou inversement; (b) observation de la mire au travers de ladite plaque de verre selon un angle donné par rapport à une direction perpendiculaire à ladite plaque; remarquable en ce que la mire comprend des lignes essentiellement horizontales. Avantageusement les lignes sont continues et foncées de manière uniforme.

Ces mesures sont particulièrement adaptées à la détection de défauts optiques du verre susceptibles de générer des coupures dans les images observées. En effet, l'observation de lignes horizontales avec un certain angle d'incidence met en évidence de manière très visible des défauts notamment d'ondulation du verre selon une direction généralement transversale aux lignes, ces défauts étant susceptibles de générer des effets de coupure selon la direction principale du défaut au niveau des images observées.

Selon un mode avantageux de l'invention, l'angle d'observation est supérieur ou égal à 30°, préférentiellement 45°, plus préférentiellement encore 50°.

Selon un autre mode avantageux de l'invention, la plaque de verre est courbée à une zone au travers de laquelle l'observation est menée. En d'autres termes, la partie de la plaque de verre qui est inspectée avec la mire n'est pas plane mais bien courbée. L'observation est préférentiellement menée dans la moitié du pare-brise selon une direction transversale, la moitié étant opposée au conducteur.

Selon un encore autre mode avantageux de l'invention, l'étape (b) d'observation comprend l'enregistrement de l'observation par photographie.

Selon un encore autre mode avantageux de l'invention, le procédé comprend une étape supplémentaire (c) d'analyse de l'observation, ladite étape comprenant l'analyse de l'épaisseur des lignes de la mire.

Selon un encore autre mode avantageux de l'invention, la présence dans l'observation de la mire d'une diminution et/ou d'une augmentation de l'épaisseur de plus de 10%, préférentiellement 30%, plus préférentiellement encore 50%, de plusieurs lignes adjacentes selon au moins approximativement une droite avec une composante verticale (c'est-à-dire transversale à une horizontale) correspond à la détection d'un défaut susceptible de générer une coupure des objets observés au travers de la plaque de verre.

Selon un encore autre mode avantageux de l'invention, la présence dans l'observation de la mire d'une diminution de l'épaisseur d'au moins 3, préférentiellement 5, plus préférentiellement encore 10 lignes adjacentes correspond au défaut susceptible de générer une coupure des objets observés au travers de la plaque de verre.

Selon un encore autre mode avantageux de l'invention, la présence dans l'observation de la mire d'une diminution suivie d'une augmentation de l'épaisseur le long de plusieurs lignes adjacentes selon au moins approximativement une droite avec une composante verticale (c'est-à-dire transversale à une horizontale) correspond à la détection d'un défaut susceptible de générer une coupure des objets observés au travers de la plaque de verre.

Selon un encore autre mode avantageux de l'invention, les lignes adjacentes de la mire sont distantes l'une de l'autre d'une distance comprise entre la moitié et le double de leur épaisseur.

Selon un encore autre mode avantageux de l'invention, les lignes de la mire présentent une épaisseur constante.

Selon un encore autre mode avantageux de l'invention, l'étape (a) comprend la projection de la mire sur un écran à partir d'un projecteur et la mise en place de la plaque de verre latéralement par rapport à l'axe principal de projection.

D'autres caractéristiques et avantages de la présente invention seront mieux compris à l'aide de la description et des dessins parmi lesquels :
- la figure 1 est un vue en plan d'une première configuration de détection de distorsions, conforme à l'invention ;
- la figure 2 est une vue en élévation de la première configuration de détection de distorsions, selon la figure 1 ;
- la figure 3 est un vue en plan d'une seconde configuration de détection de distorsions, conforme à l'invention ;
- la figure 4 est une vue en élévation de la seconde configuration de détection de distorsions, selon la figure 3 ;
- la figure 5 est une illustration d'un défaut détecté grâce au procédé selon l'invention ;
- la figure 6 est une illustration agrandie de bandes de la mire observée au travers du pare-brise selon la figure 5.
- la figure 7 est une illustration schématique de la distorsion générée par le défaut de la figure 5.

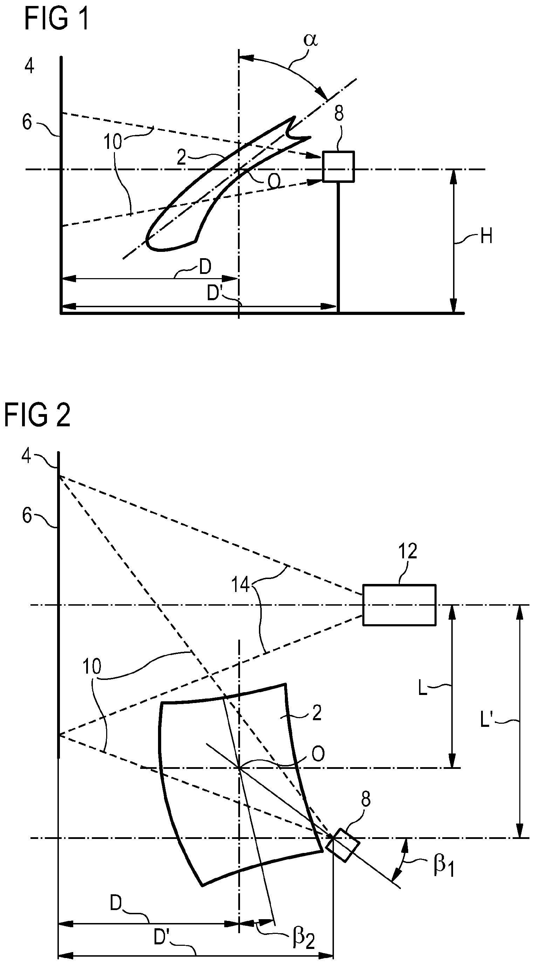

Les figures 1 et 2 illustrent une première configuration de détection de distorsions lors de l'observation au travers d'un pare-brise. Le pare-brise 2 est disposé selon son inclinaison véhicule a au moyen d'un support (non représenté). Un écran 4 est disposé en vis-à-vis de la face avant ou extérieure du pare-brise 2. Un projecteur 12 est disposé préférentiellement généralement perpendiculairement au plan de l'écran 4. Il projette selon un faisceau 14 une mire 6 sur l'écran 4. Le pare-brise est disposé latéralement par rapport audit faisceau 14. Un capteur photographique 8 du type à couplage de charge (CCD pour « Charge-Coupled Device ») est disposé également latéralement par rapport au faisceau 14 du projecteur 12 et en vis-à-vis de la surface arrière ou intérieure du pare-brise 2. Son axe longitudinal est orienté vers la mire projetée selon un angle β₁, de manière à pouvoir recevoir le faisceau 10 réfléchi du projecteur 12 au travers du pare-brise 2.

Afin de pouvoir faire varier l'angle d'observation au travers du pare-brise 2 sans devoir déplacer le capteur photographique 8, le pare-brise est déplacé en rotation selon un axe vertical d'un angle β₂ par rapport à une position parfaitement transversale, c'est-à-dire où l'axe transversal du pare-brise est parallèle à l'écran 4. L'angle d'observation au travers du pare-brise 2 est par conséquent β₁+β₂.

Le positionnement du pare-brise 2 est mesuré par rapport à un point O correspondant au centre de la zone testée et au travers de laquelle l'image de la mire 6 est observée. On peut observer à la figure 1 que ce point est approximativement central sur la hauteur du pare-brise 2 à une hauteur H par rapport à une référence 0 verticale et que le capteur photographique 8 est disposé à la même hauteur. On peut observer également à la figure 2 que le point O est situé dans une moitié droite du pare-brise (en particulier pour les véhicules avec conduite à gauche) qui correspond à la zone du pare-brise présentant les rayons de courbure les plus importants et au travers duquel le conducteur est amené à observer l'extérieur du véhicule avec un d'incidence important, habituellement supérieur à 45° (par rapport à un perpendiculaire à la zone du pare-brise en question). Le point de référence O du pare-brise est ainsi à une distance latérale L par rapport à l'axe du faisceau 14. Le capteur photographique 8 est à une distance latérale L' par rapport à l'axe du faisceau 14 du projecteur 12, la distance L étant supérieure à la distance L. Il en va de même pour les distances D et D' par rapport au plan de l'écran 4.

La configuration d'observation selon les figures 1 et 2 est particulièrement intéressante dans la mesure où elle ne requiert d'un point de vue mécanique qu'un mouvement de rotation du pare-brise 2. En effet, le projecteur 12, l'écran 4 et le capteur photographique 8 restent en principe immobiles.

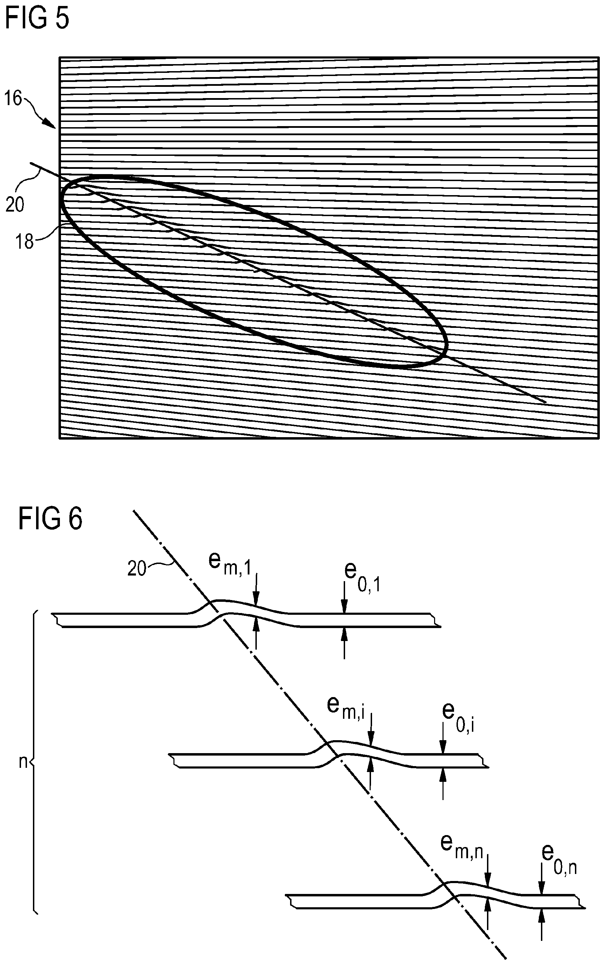

La mire 6 (non visible sur les figures 1 et 2) comprend des lignes parallèles généralement horizontales. L'intérêt d'une telle mire et son observation en vue de détecter des distorsions seront détaillés en relation avec les figures 5 et 6.

Les images récoltées et mémorisées par le capteur photographique 8 sont ensuite observées humainement et éventuellement comparées à des modèles de distorsion connus ou alors analysées de manière automatique par processus électronique, notamment par ordinateur.

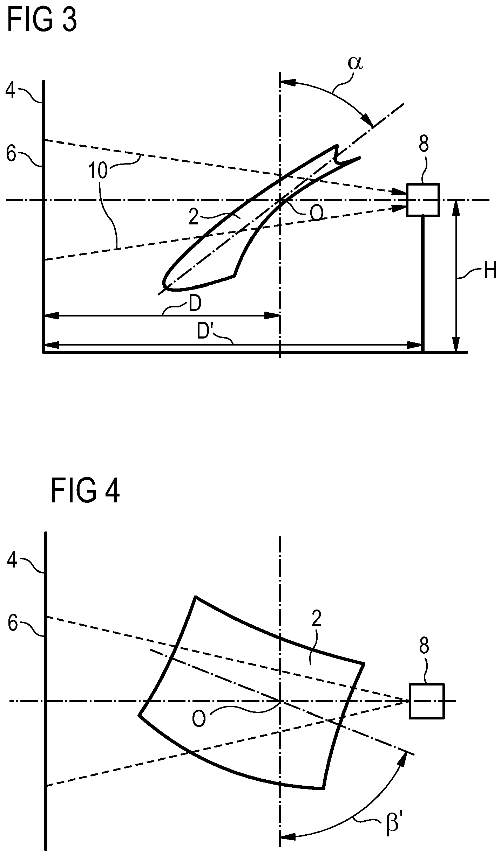

Les figures 3 et 4 illustrent une deuxième configuration d'observation d'un pare-brise en vue de détecter des distorsions. Dans cette configuration, le pare-brise 2 est disposé directement entre un écran 4 présentant une mire 6 et un capteur photographique 8. Plus précisément, l'écran est soit retro-projeté avec un rétroprojecteur disposé du côté de l'écran opposé à celui qui est en face du pare-brise (non illustré) ou encore l'écran comporte le dessin de la mire et est éclairé par des projecteurs de lumière (non illustrés) disposés du même côté de l'écran que le pare-brise 2. Le capteur photographique 8 est disposé de sorte à ce que son axe longitudinal optique soit essentiellement perpendiculaire au plan de l'écran 4 et le pare-brise 2 est disposé entre ledit capteur 8 et ledit écran 4. Comme cela est visible à la figure 3, le pare-brise 2 est incliné selon son inclinaison véhicule a au moyen d'un support (non représenté). Il est ensuite déplacé en rotation selon un axe préférentiellement vertical jusqu'à ce que son axe transversal forme un angle β' avec la perpendiculaire à l'axe longitudinal du faisceau 10 d'observation du capteur photographique 8. Cet angle β' correspond à l'angle d'incidence dans un plan horizontal du faisceau 10 traversant le pare-brise 2 au niveau de sa zone centrée sur le point O et arrivant au capteur photographique 8. La rotation du pare-brise selon un axe vertical permet de modifier l'angle β' afin de détecter les défauts susceptibles d'occasionner des distorsions gênantes.

De manière générale, l'angle d'incidence de l'observation, c'est-à-dire l'angle formé par la direction principale d'observation et la perpendiculaire à la surface du pare-brise au niveau de la zone d'observation, est supérieur à 45°, préférentiellement à 50°, plus préférentiellement à 55°. En pratique, les distorsions observables par un conducteur ont lieu pour des angles compris entre 45° et 70°, préférentiellement entre 50° et 65°, plus préférentiellement encore entre 55° et 60°.

La figure 5 illustre l'image 16 reçue par le capteur et observable au travers d'un pare-brise présentant un défaut 18 susceptible d'occasionner une distorsion avec effet de coupure. On peut y observer la mire constituée d'une série de lignes parallèles espacées de manière régulière. Les lignes de la mire au niveau de l'écran sont en principe généralement horizontales. Les lignes visibles à l'image 16 de la figure 5 ne sont pas rigoureusement horizontales. En effet, elles semblent converger vers une zone sensiblement éloignée à la gauche de l'image. Cette déformation est due à la géométrie courbée du pare-brise. On peut observer à l'image 16 qu'une série de lignes voisines présentent, chacune, un ressaut. Ces ressauts sont généralement alignés selon une droite 20 transversale aux lignes de la mire.

Les lignes sont illustrées en agrandi à la figure 6 où on peut observer que l'épaisseur des lignes diminue sensiblement au niveau du ressaut. En principe, toutes les lignes ont une même épaisseur au niveau de la mire. Il en va en principe de même pour leur image, à l'exception des endroits correspondant à des défauts. Chaque ligne présente une épaisseur nominale eo et une épaisseur minimale eₘ au niveau du ressaut. Cette diminution d'épaisseur est indicatrice d'une coupure au niveau de l'observation qui pourra être faite au travers du pare-brise à cet endroit. La présence d'une succession de diminutions d'épaisseur sur plusieurs lignes successives est significative d'un défaut susceptible de générer un effet optique de coupure. On peut d'ailleurs observer que les deux parties de chaque ligne, de part et d'autre du ressaut, sont légèrement décalées verticalement. Les parties de lignes à la gauche des ressauts sont en effet légèrement plus basses que les parties correspondantes à la droite des ressauts.

En pratique les défauts générant des distorsions, en particulier des distorsions de coupure, proviennent d'ondulations d'une des feuilles de verre ou des deux feuilles de verre formant le pare-brise. En effet, ces feuilles de verre sont découpées à partir de grandes plaques de verre produites par écoulement de verre fondu sur un bain d'étain et ensuite refroidi et convoyé sur des rouleaux. Le verre est dit ainsi flotté (en anglais « float glass »). Lorsque le verre encore pâteux quitte le bain d'étain, il est transporté sur un long convoyeur à rouleaux équipé d'un dispositif de refroidissement à air pulsé. Le verre peut donc encore se déformer par ondulation en raison des rouleaux. Pour cette raison, ces défauts s'étendent sur une certaine longueur plutôt que d'être ponctuels. Leur détection se manifeste par conséquent par l'apparition de diminution d'épaisseur et/ou la présence de ressauts de plusieurs lignes adjacentes.

Des variations d'épaisseurs des lignes peuvent cependant être visibles dans l'image de la mire observée sans pour autant nécessairement correspondre à un défaut occasionnant une distorsion ou gêne notoire pour l'utilisateur du véhicule équipé du pare-brise en question. En fonction de divers paramètres, la valeur critique de diminution d'épaisseur des lignes sera supérieure ou égale à 10%, préférentiellement 20%, plus préférentiellement encore 30%, plus préférentiellement encore 40%, plus préférentiellement encore 50%.

Similairement le nombre minimum de lignes adjacentes minimum sujettes à de telles observations nécessaire pour conclure à la présence d'un défaut dépendra de divers paramètres. En pratique, le nombre minimum sera 3, préférentiellement 5, plus préférentiellement encore 10, plus préférentiellement encore 15.

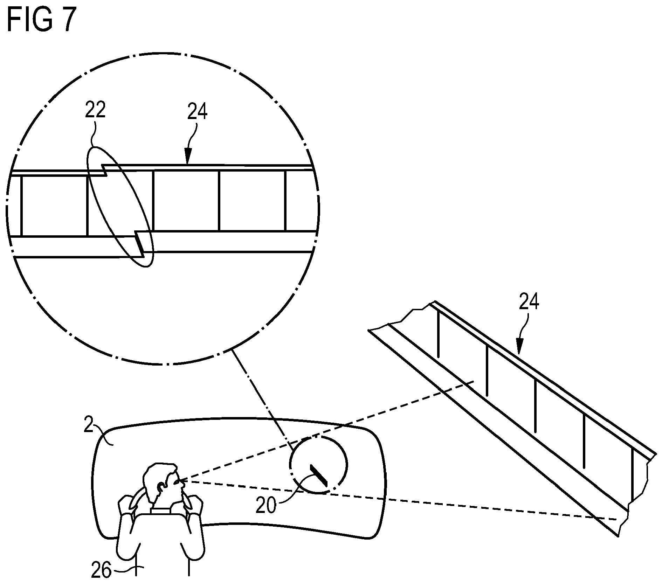

La figure 7 illustre l'effet d'un défaut de distorsion par coupure 20 tel qu'identifié à la figure 5 pour un conducteur 26 d'un véhicule équipé d'un tel pare-brise 2. Le conducteur observe le trottoir à sa droite, le trottoir étant équipé d'une rambarde 24 généralement rectiligne et parallèle au trottoir et à la route. L'image du trottoir perçue par le conducteur au travers de la zone entourée du pare-brise et présentant le défaut 20 présentera une coupure 22 qui peut être considérée comme gênante pour la perception de l'environnement et, partant, la sécurité.

## Revendications

1. Procédé de détection de distorsion optique dans une plaque de verre (2), comme un pare-brise de véhicule, comprenant les étapes suivantes :
(a) mise en place d'une mire (6) et mise en place de ladite plaque de verre (2) en face de ladite mire (6) ou inversement ;
(b) observation de la mire (6) au travers de ladite plaque de verre (2) selon un angle d'incidence de l'observation donné par rapport à une perpendiculaire à ladite plaque, ledit angle étant formé par la direction principale d'observation et la perpendiculaire à la surface de la plaque (2) au niveau de la zone d'observation ;
**caractérisé en ce que**
la mire (6) comprend des lignes essentiellement horizontales et le procédé comprend une étape supplémentaire (c) d'analyse de l'observation, ladite étape comprenant l'analyse de l'épaisseur des lignes de la mire (6).

2. Procédé selon la revendication 1, **caractérisé en ce que** l'angle d'observation est supérieur ou égal à 30°, préférentiellement 45° plus préférentiellement encore 50°.

3. Procédé selon l'une des revendications 1 et 2, **caractérisé en ce que** la plaque de verre (2) est courbée à une zone au travers de laquelle l'observation est menée.

4. Procédé selon l'une des revendications 1 à 3, **caractérisé en ce que** l'étape (b) d'observation comprend l'enregistrement de l'observation par photographie.

5. Procédé selon l'une des revendications 1 à 4, **caractérisé en ce que** la présence dans l'observation de la mire d'une diminution et/ou d'une augmentation de l'épaisseur de plus de 10%, préférentiellement 30%, plus préférentiellement encore 50%, de plusieurs lignes adjacentes selon au moins approximativement une droite avec une composante verticale correspond à la détection d'un défaut susceptible de générer une coupure des objets observés au travers de la plaque de verre.

6. Procédé selon la revendication 5, **caractérisé en ce que** la présence dans l'observation de la mire (6) d'une diminution de l'épaisseur d'au moins 3, préférentiellement 5, plus préférentiellement encore 10 lignes adjacentes correspond au défaut susceptible de générer une coupure des objets observés au travers de la plaque de verre.

7. Procédé selon l'une des revendications 5 et 6, **caractérisé en ce que** la présence dans l'observation de la mire (6) d'une diminution suive d'une augmentation de l'épaisseur le long de plusieurs lignes adjacentes selon au moins approximativement une droite avec une composante verticale (20) correspond à la détection d'un défaut susceptible de générer une coupure des objets observés au travers de la plaque de verre (2).

8. Procédé selon l'une des revendications 1 à 7, **caractérisé en ce que** les lignes adjacentes de la mire sont distantes l'une de l'autre d'une distance comprise entre la moitié et le double de leur épaisseur.

9. Procédé selon l'une des revendications 1 à 8, **caractérisé en ce que** les lignes de la mire présentent une épaisseur constante.

10. Procédé selon l'une des revendications 1 à 9, **caractérisé en ce que** l'étape (a) comprend la projection de la mire (6) sur un écran à partir d'un projecteur (12) et la mise en place de la plaque de verre (2) latéralement par rapport à l'axe principal de projection.

## Patentansprüche

1. Verfahren zum Erkennen optischer Verzerrung in einer Glasplatte (2), wie einer Fahrzeugwindschutzscheibe, das die folgenden Schritte umfasst:
(a) Einrichten eines Testbilds (6) und Einrichten der Glasplatte (2) gegenüber dem Testbild (6) oder umgekehrt;
(b) Beobachten des Testbilds (6) durch die Glasplatte (2) gemäß einem gegebenen Beobachtungseinfallwinkel in Bezug auf eine Senkrechte der Platte, wobei der Winkel von der Hauptbeobachtungsrichtung und der Senkrechten zu der Oberfläche der Platte (2) im Bereich der Beobachtungszone gebildet ist;
**dadurch gekennzeichnet, dass**
das Testbild (6) im Wesentlichen horizontale Linien umfasst, und das Verfahren einen zusätzlichen Schritt (c) zur Analyse der Beobachtung umfasst, wobei der Schritt die Analyse der Stärke der Linien des Testbilds (6) umfasst.

2. Verfahren nach Anspruch 1, **dadurch gekennzeichnet, dass** der Beobachtungswinkel größer oder gleich 30°, bevorzugt 45°, noch bevorzugter 50° ist.

3. Verfahren nach einem der Ansprüche 1 und 2, **dadurch gekennzeichnet, dass** die Glasplatte (2) zu einer Zone gekrümmt ist, durch die die Beobachtung ausgeführt wird.

4. Verfahren nach einem der Ansprüche 1 bis 3, **dadurch gekennzeichnet, dass** der Schritt (b) des Beobachtens das Aufzeichnen der Beobachtung durch Fotografie umfasst.

5. Verfahren nach einem der Ansprüche 1 bis 4, **dadurch gekennzeichnet, dass** die Gegenwart bei der Beobachtung des Testbilds einer Verringerung und/oder einer Erhöhung der Stärke von mehr als 10 %, bevorzugt 30 %, noch bevorzugter 50 % mehrerer benachbarter Linien gemäß mindestens in etwa einer Geraden mit einer vertikalen Komponente dem Erkennen eines Defekts entspricht, der eine Unterbrechung der Objekte, die durch die Glasplatte beobachtet werden, erzeugen kann.

6. Verfahren nach Anspruch 5, **dadurch gekennzeichnet, dass** die Gegenwart in der Beobachtung des Testbilds (6) einer Verringerung der Stärke um mindestens 3, bevorzugt 5, noch bevorzugter 10 benachbarter Linien einem Defekt entspricht, der eine Unterbrechung der Objekte, die durch die Glasplatte beobachtet werden, erzeugen kann.

7. Verfahren nach einem der Ansprüche 5 und 6, **dadurch gekennzeichnet, dass** die Gegenwart in der Beobachtung des Testbilds (6) einer Verringerung gefolgt von einer Erhöhung der Stärke entlang mehrerer benachbarter Linien gemäß mindestens in etwa einer Geraden mit einer vertikalen Komponente (20) dem Erkennen eines Defekts entspricht, der eine Unterbrechung der Objekte, die durch die Glasplatte (2) beobachtet werden, erzeugen kann.

8. Verfahren nach einem der Ansprüche 1 bis 7, **dadurch gekennzeichnet, dass** die benachbarten Linien des Testbilds voneinander um eine Entfernung beabstandet sind, die zwischen der Hälfte und dem Doppelten ihrer Stärke liegt.

9. Verfahren nach einem der Ansprüche 1 bis 8, **dadurch gekennzeichnet, dass** die Linien des Testbilds eine konstante Stärke aufweisen.

10. Verfahren nach einem der Ansprüche 1 bis 9, **dadurch gekennzeichnet, dass** der Schritt (a) die Projektion des Testbilds (6) auf einen Bildschirm ausgehend von einem Projektor (12) und das Einrichten der Glasplatte (2) seitlich bezüglich der Hauptprojektionsachse umfasst.

## Claims

1. A method for detection of optical distortion in a glass plate (2), such as a vehicle windshield, including the following steps:
(a) putting in place target (6) and putting in place said glass plate (2) opposite said target (6) or vice versa;
(b) observing the target (6) through said glass plate (2) along a given observation angle of incidence with respect to a perpendicular to said plate, said angle being formed by the principal observation direction and the perpendicular to the surface of the plate (2) at the level of the observation zone;
**characterized in that**
the target (6) includes essentially horizontal lines and the method includes a supplementary step (c) of analysis of the observation, said step including the analysis of the thickness of the lines of the target (6) .

2. The method according to Claim 1, **characterized in that** the observation angle is greater than or equal to 30°, preferably 45°; still more preferably 50°.

3. The method according to one of Claims 1 and 2, **characterized in that** the glass plate (2) is curved at a zone through which the observation is taken.

4. The method according to one of Claims 1 to 3, **characterized in that** the observation step (b) includes the recording of the observation by photography.

5. The method according to one of Claims 1 to 4, **characterized in that** the presence, in the observation of the target, of a reduction and/or of an increase in the thickness of more than 10%, preferably 30%, still more preferably 50%, of several adjacent lines along at least approximately a straight line with a vertical component corresponds to the detection of a defect liable to generate a cutting-off of the objects observed through the glass plate.

6. The method according to Claim 5, **characterized in that** the presence, in the observation of the target (6), of a reduction in the thickness of at least 3, preferably 5, still more preferably 10 adjacent lines corresponds to the defect liable to generate a cutting-off of the objects observed through the glass plate.

7. The method according to one of Claims 5 and 6, **characterized in that** the presence, in the observation of the target (6), of a reduction following by an increase in the thickness along several adjacent lines along at least approximately a straight line with a vertical component (20) corresponds to the detection of a defect liable to generate a cutting-off of the objects observed through the glass plate (2).

8. The method according to one of Claims 1 to 7, **characterized in that** the adjacent lines of the target and distant from one another by a distance comprised between half and twice their thickness.

9. The method according to one of Claims 1 to 8, **characterized in that** the lines of the target present a constant thickness.

10. The method according to one of Claims 1 to 9, **characterized in that** step (a) includes the projection of the target (6) on a screen from a projector (12) and the putting in place of the glass plate (2) laterally with respect to the principal projection axis.
